# EUROPEAN PATENT SPECIFICATION

(11) **EP 1 361 145 B1**
(45) Date of publication and mention of the grant of the patent: **06.10.2010**
(21) Application number: 03006381.2
(22) Date of filing: 20.03.2003
(51) Int. Cl.: B62J 6/04, B60Q 1/56

(54) **Rear illumination apparatus for motorcycles**
Rücklichtvorrichtung für Motorrad
Dispositif de feu arrière pour motocyclette

(30) Priority: 09.05.2002 JP 2002133543
(43) Date of publication of application: 12.11.2003
(73) Proprietor: HONDA GIKEN KOGYO KABUSHIKI KAISHA, Minato-ku, Tokyo (JP)
(72) Inventor: Otsubo, Mamoru c/o Kabushiki Kaisha Honda Gijutsu Kenkyusho,, Wako-shi, Saitama (JP); Tanaka, Jun c/o Kabushiki Kaisha Honda Gijutsu Kenkyusho,, Wako-shi, Saitama (JP); Yamaguchi, Masaaki c/o Kabushiki Kaisha Honda Gijutsu Kenkyusho,, Wako-shi, Saitama (JP)
(74) Representative: Liska, Horst

(56) References cited:
- JP-A- 60 143 149
- JP-A- 61 115 785
- JP-U- 3 078 690
- US-A- 3 828 178
- US-A- 3 916 377
- US-A- 3 941 994
- US-A- 4 958 451

## Description

The present invention relates to a rear illumination apparatus for a motorcycle including a license plate, a license light for illuminating the license plate, and a reflector, provided on a rear fender for covering the upward of the rear portion of a rear wheel.

In the related art, for example, in a motorcycle disclosed in JP-UM-B-61-30951, a reflector is directly attached to a rear fender.

The posture of the reflector in the state of being attached to the rear fender is specified in regulations, and thus in the structure in which the reflector is directly attached to the rear fender as in the case of the related art, the configuration of the rear fender is limited, and when the rear fender is formed by molding of synthetic resin, the direction of die-cutting is constrained, which requires a specific structure of the reflector.

On the other hand, there may be the case where a license plate and a license light for illuminating the license plate are attached to the rear fender in addition to the aforementioned reflector. In such a case, it is preferable to improve assembling property of the reflector, the license light, and the license plate to the rear fender.

Document US-A-3,828,178 discloses a rear illumination apparatus with improved assembling properties, but whose integration in the rear fender is not appealing.

In view of such circumstances, it is an object of the present invention to provide a rear illumination apparatus for a motorcycle in which the reflector is attached to the rear fender so as not to constrain the configuration of the rear fender to expand versatility, and assembling property of the reflector, the license light, and the license plate to the rear fender is improved.

In order to achieve the object described above, the invention claims a rear illumination apparatus for a motorcycle according to Claim 1.

In this arrangement, since the reflector is attached to the base member on which the license light is mounted, constraint on configuration of the rear fender may be avoided as much as possible when mounting the reflector, and constraint on direction of die-cutting may also be avoided even when the rear fender is formed by molding of synthetic resin, so that the reflector may be commonly used for rear fenders of various motorcycles to expand versatility. In addition, since the base member in a state in which the license light and the reflector are already assembled must simply be mounted to the rear fender, assembling property of the reflector, the license light, and the license plate to the rear fender may be improved.

In addition to this construction, a recess opening toward the rear is formed on the upper portion of the aforementioned rear fender, and the aforementioned base member is attached to the aforementioned rear fender by accommodating part of the aforementioned base member into the aforementioned recess . In this arrangement, the amount of projection of the base member rearward from the rear fender may be minimized.

A mode for carrying out the invention will be described based on an embodiment of the present invention illustrated in attached drawings.
Fig. 1 is a side view of a motorcycle according to the first embodiment.
Fig. 2 is an enlarged view when viewed in the direction illustrated by an arrow 2 in Fig. 1.
Fig. 3 is a cross sectional view taken along the line 3-3 in Fig. 2.
Fig. 4 is a cross sectional view taken along the line 4-4 in Fig. 3.
Fig. 5 is a cross sectional view taken along the line 5-5 in Fig. 3.
Fig. 6 is a cross sectional view taken along the line 6-6 in Fig. 3.
Fig. 7 is a side view of a base member, a reflector and a license light according to the second embodiment.

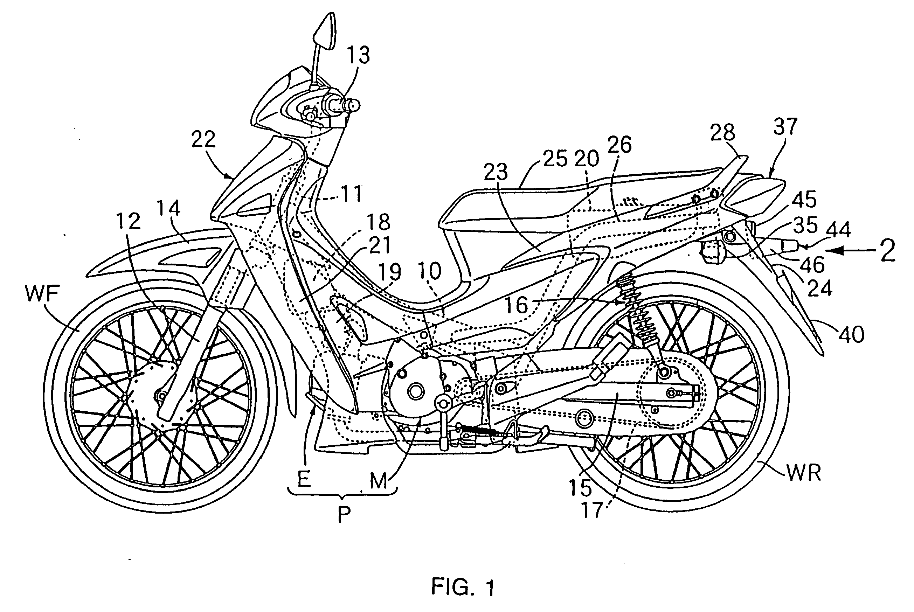

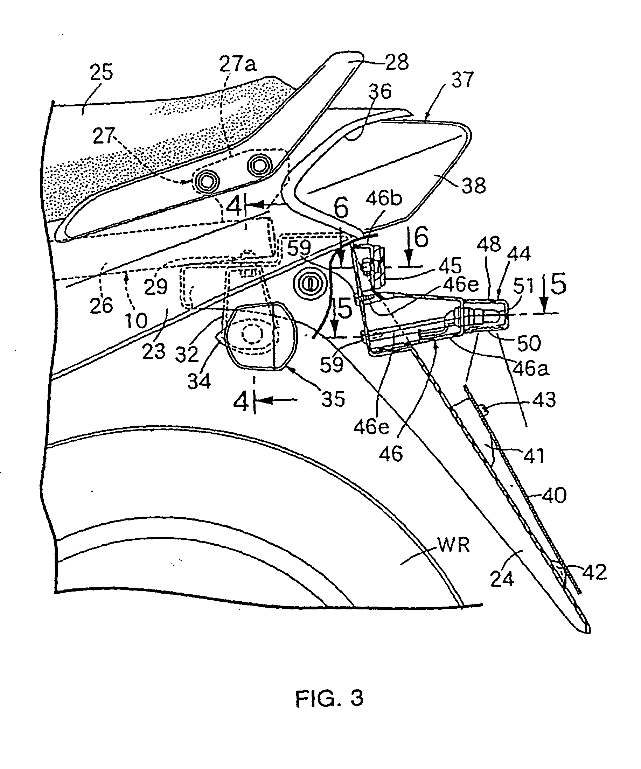

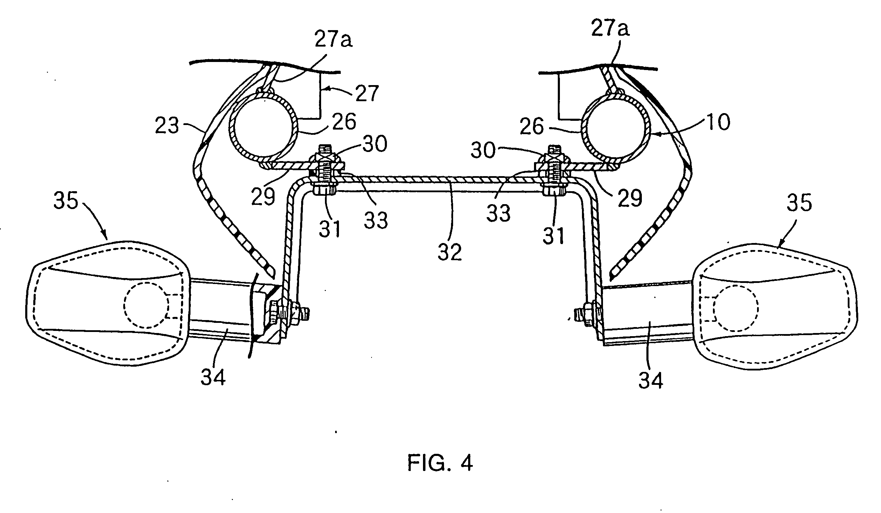

Fig. 1 to Fig. 6 show a first embodiment of the present invention.

In Fig. 1, a head pipe 11 provided at the front end of a vehicle body frame 10 of a motorcycle steerably supports a front fork 12, which supports a front wheel WF. A bar handle 13 is connected to the upper end of the front fork 12, and a front fender 14 covering the upward of the front wheel WF is supported by the front fork 12.

A rear fork 15 for rotatably supporting a rear wheel WR is supported at the midsection of the vehicle body frame 10, and a rear cushion 16 is provided between the rear portion of the vehicle body frame 10 and the rear fork 15.

A power unit P including an engine E and a transmission M is supported at the midsection of the vehicle body frame 10, and outputs from the aforementioned transmission M are transmitted to the rear wheel WR via a chain 17.

An air cleaner 18 and a carburetor 19 disposed between the air cleaner 18 and the engine E are disposed above the engine E, and a fuel tank 20 disposed above the rear wheel WR is supported by the vehicle body frame 10.

The front portion of the aforementioned vehicle body frame 10, the engine E, the carburetor 19, and the air cleaner 18 are covered with a front cover 22 of synthetic resin, which includes a pair of left and right leg shields 21, and being mounted on the vehicle body frame 10. The rear portion of the vehicle body frame 10 and the fuel tank 20 are covered with a rear cover 23 formed of synthetic resin, which is mounted on the vehicle body frame 10, and a rear fender 24 for covering upwardly of the rear portion of the rear wheel WR is connected to the rear cover 23. A pillion seat 25 is provided on the rear cover 23, so that a driver can sit on the front half of the pillion seat 25.

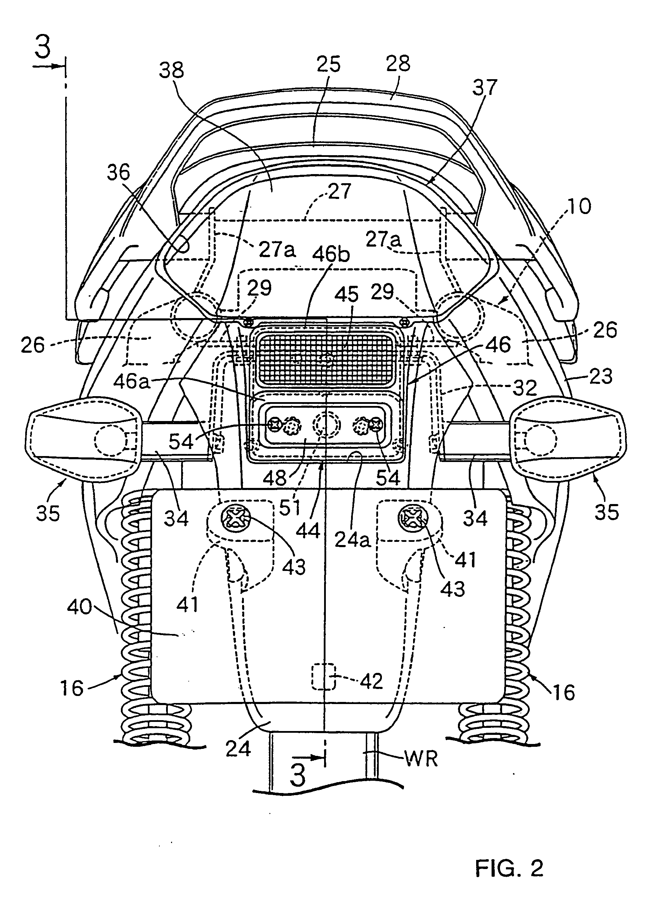

Referring also to Fig. 2 to Fig. 4, the vehicle body frame 10 is provided with a pair of left and right seat rails 26 and 26 on the rear portion thereof, and the rear portions of the seat rails 26 and 26 are connected with each other by a cross member 27, which include a pair of supporting plate portions 27a and 27a extending from the rear portion of the seat rails 26 and 26 upward oppose to each other, and the rear portion of the rear cover 23 is secured to the aforementioned both supporting plate portions 27a and 27a together with the left and the right ends of grab rails 28.

Stays 29 and 29 extending toward each other are fixed below the rear ends of the aforementioned both seat rails 26 and 26, and the ends of the stays 29 and 29 on the sides closer to each other are provided with weld nuts 30 and 30.

A substantially U shaped supporting plate 32 opening downward is disposed below the aforementioned both stays 29 and 29, and the upper portion on the left and the right sides of the supporting plate 32 is secured to both of the stays 29 and 29 with resilient members 33 and 33 clamped with the lower surfaces of the aforementioned stays 29 and 29. In other words, bolts 31 and 31 inserted through the supporting plate 32, the resilient members 33 and 33, and both of the stays 29 and 29 from below are screwed into the aforementioned weld nuts 30 and 30.

The lower portion of the left and the right ends of the aforementioned supporting plate 32 projects downward from the rear cover 23, and the proximal ends of supporting arms 34 and 34 extending from the supporting plate 32 laterally outward are secured to the lower portion of the left and the right ends of the supporting plate 32 at a substantially right angle, and rear turn signals 35 and 35 are attached to the distal ends of the both supporting arms 34 and 34, respectively so as to face rearward.

An opening 36 opening toward the rear is formed at the rear end of the rear cover 23, and a tail light 37 having a lens 38 projecting from the opening 36 toward the rear is disposed in the opening 36.

The rear fender 24 having a license plate 40 attached at the vertically midsection thereof, is integrally provided with a pair of left and right plate mounting portions 41 and 41 to which the upper portion of the license plate 40 is secured with screw members 43 and 43, and the rear fender 24 is integrally formed with a supporting projection 42 for receiving the lower portion of the license plate 40 so as to project from the lower portion of the rear fender 24.

A base member 46 on which a license light 44 for illuminating the license plate 40 is attached to the rear fender 24 at the position above the aforementioned license plate 40, and a reflector 45 is attached to the base member 46 at the position above the license light 44.

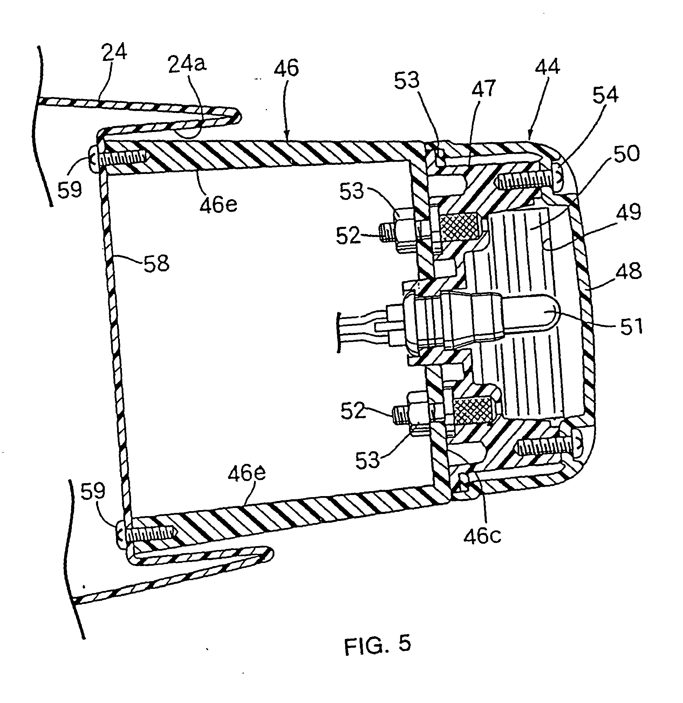

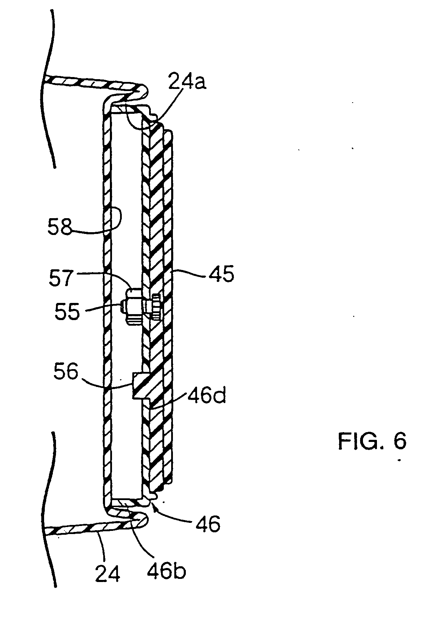

Referring also to Fig. 5 and Fig. 6, the upper portion of the rear fender 24 is formed with a recess 24a projecting toward the front and opening toward the rear, and the base member 46 is attached to the rear fender 24 with part thereof accommodated in the recess 24a.

The base member 46 includes a base body 46a formed into a bottomed cylindrical shape, which is relatively elongated in the fore-and-aft direction, rectangular in lateral cross section, and closed at the rear end, and a overhanging portion 46b, which is overhanging from a base portion of the base body 46a upward and formed into a rectangular cylindrical shape with the rear end closed, and formed integrally with each other of synthetic resin. The rear surface of the closed portion at the rear end of the base body 46a is formed as a flat first mounting surface 46c, and the rear surface of the closed portion at the rear end of the overhanging portion 46b is formed as a flat second mounting surface 46d.

The base body 46a of the base member 46 is integrally formed at the base portion thereof with a plurality of, for example, three boss members 46e, 46e ... at a distance from each other. On the other hand, the rear surface of the closed end of the recess 24a of the rear fender 24 is formed as a flat base member mounting surface 58. The proximal end, that is, the front end of the base member 46 abuts against the base member mounting surface 58. Therefore, the base member 46 is attached to the upper portion of the rear fender 24 with part thereof accommodated into the recess 24a by three tap screws 59, 59, ... inserted into the closed end of the recess 24a from the front and screwed into the aforementioned boss members 46e, 46e, ... respectively.

The license light 44 includes a base 47 to be secured to the first mounting surface 46c of the base member 46, a case 48 having a window 49 facing toward the aforementioned license plate 40 at the lower portion thereof and secured to the base 47, a lens 50 to be fixed to the case 48 so as to be fitted into the aforementioned window 49, and a bulb 51 attached to the base 47 and disposed between the base 47 and the case 48.

The base 47 is formed of synthetic resin, and the base 47 is secured to the first mounting surface 46c of the base member 46 by inserting a plurality of, for example, a pair of bolts 52 and 52, which are embedded into the base 47 by molding, into the closed end of the rear portion of the base member 46, and screwing nuts 53 and 53 on the bolts 52 and 52 in the base member 46.

A seal member 53 is interposed between the base 47 and the case 48, and a plurality of, for example, a pair of tap screws 54 ... which are inserted into the case 48, are screwed into the base 47.

A reflector 45 includes a bolt 55 embedded therein by molding so as to project from the center toward the front, and a positioning pin 56 integrally projecting forward from the position adjacent to the bolt 55. The reflector 45 is secured to the second mounting surface 46d of the base member 46 by inserting the bolt 55 and the positioning pin 56 into the closed portion at the rear end of the overhanging portion 46b of the base member 46, and screwing a nut 57 onto the aforementioned bolt 55 in the base member 46.

Subsequently, the operation of the first embodiment will be described. Since the license light 44 is mounted to the base member 46, which is attached to the rear fender 24, and then the reflector 45 is also mounted thereto at the position above the license light 44, constraint on configuration of the rear fender 24 may be avoided as much as possible when mounting the reflector 45, and constraint on direction of die-cutting may also be avoided even when the rear fender 24 is formed by molding of synthetic resin, so that the reflector 45 may be commonly used for rear fenders 24 of various motorcycles to expand versatility.

In addition, since the base member 46 in a state in which the license light 44 and the reflector 45 is already assembled must simply be mounted to the rear fender 24, assembling property of the reflector 45, the license light 44, and the license plate 40 to the rear fender 24 may be improved.

Since the recess 24a opening toward the rear is formed on the upper portion of the rear fender 24, and the base member 46 is attached to the rear fender 24 by accommodating part of the base member 46 into the aforementioned recess 24a, the amount of projection of the base member 46 rearward from the rear fender 24 may be minimized.

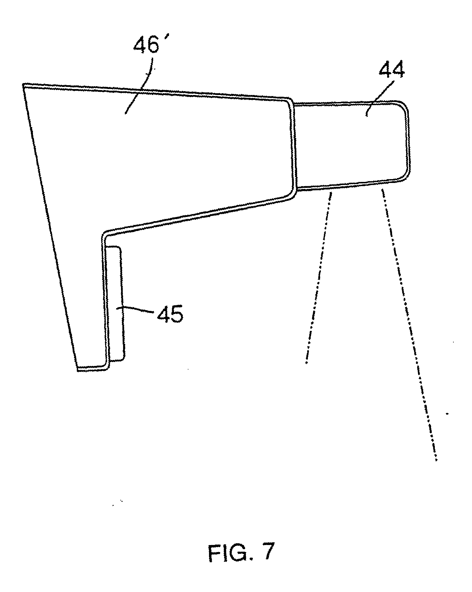

As a second embodiment of the present invention, as shown in Fig. 7, it is also applicable that the reflector 45 is attached to the base member 46, to which the license light 44 is provided on the upper portion thereof, at the position below the license light 44.

The invention enables a reflector to be mounted to a rear fender without constraining the configuration of the rear fender so as to expand versatility and improve assembly property of the reflector, a license light, and a license plate to the rear fender, in a rear illumination apparatus for a motorcycle including the license plate, the license light for illuminating the license plate, and the reflector mounted on the rear fender covering the upward of the rear portion of a rear wheel. To achieve this, a license light 44 is provided on a base member 46, which is to be attached to a rear fender 24, and also a reflector 45 is attached thereto at the position above a license light 44.

## Claims

1. A rear illumination apparatus for a motorcycle comprising: a license plate (40); a license light (44) for illuminating the license plate (40); and a reflector (45) to be mounted on a rear fender (24) covering upwardly of the rear portion of a rear wheel (WR), wherein said license light (44) and said reflector (45) are attached to a base member (46) to be mounted on said rear fender (24), and wherein said license light (44) is provided at a position above the license plate (40),
**characterized in that**
the base member (46) includes a base body (46a) formed into a bottomed cylindrical shape, which is relatively elongated in the fore-and-aft direction and closed at the rear end, and an overhanging portion (46b), which is overhanging from a base portion of the base body (46a) upward and formed into a cylindrical shape with the rear end closed,
wherein the base body (46a) and the overhanging portion (46b) are formed integrally with each other of synthetic resin,
wherein the rear surface of the closed portion at the rear end of the base body (46a) is formed as a first mounting surface (46c) for mounting of the license light (44) and a rear surface of the closed portion at the rear end of the overhanging portion (46b) is formed as a second mounting surface (46b) for mounting of said reflector (45), and
wherein the base member (46) is to be attached to the rear fender (24) by accommodating part of said base member (46) into a recess (24a) opening toward the rear and formed on an upper portion of said rear fender (24).

## Patentansprüche

1. Hintere Beleuchtungsvorrichtung für ein Kraftrad, umfassend: ein Nummernschild (40); eine Nummernschildbeleuchtung (44) zum Beleuchten des Nummernschilds (40); und einen Reflektor (45), welcher an einem hinteren Schutzblech (24) anzubringen ist, welches aufwärts von dem hinteren Abschnitt eines Hinterrads (WR) abdeckt, wobei die Nummernschildbeleuchtung (44) und der Reflektor (45) an einem Basiselement (46) angebracht sind, welches an dem hinteren Schutzblech (24) anzubringen ist, und wobei die Nummernschildbeleuchtung (44) an einer Position oberhalb des Nummernschilds (40) vorgesehen ist,
**dadurch gekennzeichnet, dass**
das Basiselement (46) einen Basiskörper (46a) umfasst, welcher in einer mit einem Boden versehenen zylindrischen Form ausgebildet ist, welche in der Längsrichtung relativ verlängert ist und an dem hinteren Ende geschlossen ist, und einen überhängenden Abschnitt (46b) umfasst, welcher von einem Basisabschnitt des Basiskörpers (46a) nach oben überhängt und in einer zylindrischen Form mit geschlossenem hinteren Ende ausgebildet ist,
wobei der Basiskörper (46a) und der überhängende Abschnitt (46b) integral miteinander aus Kunstharz ausgebildet sind,
wobei die hintere Fläche des geschlossenen Abschnitts an dem hinteren Ende des Basiskörpers (46a) als eine erste Montagefläche (46c) zur Montage der Nummernschildbeleuchtung (44) ausgebildet ist und eine hintere Fläche des geschlossenen Abschnittes an dem hinteren Ende des überhängenden Abschnitts (46b) als eine zweite Montagefläche (46b) zur Montage des Reflektors (45) ausgebildet ist, und
wobei das Basiselement (46) an dem hinteren Schutzblech (24) anzubringen ist, indem ein Teil des Basiselements (46) in einer Ausnehmung (24a) untergebracht wird, welche zur Rückseite hin öffnet und an einem oberen Abschnitt des hinteren Schutzblechs (24) ausgebildet ist.

## Revendications

1. Dispositif d'éclairage arrière pour une motocyclette comprenant : une plaque d'immatriculation (40) ; un éclairage de plaque d'immatriculation (44) pour éclairer la plaque d'immatriculation (40) ; et un réflecteur (45) destiné à être monté sur un garde-boue arrière (24) recouvrant vers le haut la partie arrière d'une roue arrière (WR), dans lequel ledit éclairage de plaque d'immatriculation (44) et ledit réflecteur (45) sont fixés sur un élément de base (46) destiné à être monté sur ledit garde-boue arrière (24), et dans lequel ledit éclairage de plaque d'immatriculation (44) est prévu dans une position au-dessus de la plaque d'immatriculation (40),
**caractérisé en ce que** :
l'élément de base (46) comprend un corps de base (46a) formé selon une forme à fond cylindrique, qui est relativement allongé dans la direction d'avant en arrière et fermé au niveau de l'extrémité arrière, et une partie en saillie (46b) qui fait saillie par rapport à une partie de base du corps de base (46a) vers le haut et formée selon une forme cylindrique avec l'extrémité arrière fermée,
dans lequel le corps de base (46a) et la partie en saillie (46b) sont formés de manière intégrale entre eux en une résine synthétique ;
dans lequel la surface arrière de la partie fermée au niveau de l'extrémité arrière du corps de base (46a) est formée comme une première surface de montage (46c) pour monter l' éclairage de plaque d' immatriculation (44) et une surface arrière de la partie fermée au niveau de l'extrémité arrière de la partie en saillie (46b) est formée comme une seconde surface de montage (46b) pour monter ledit réflecteur (45), et
dans lequel l'élément de base (46) est destiné à être fixé sur le garde-boue arrière (24) en logeant une partie dudit élément de base (46) dans un évidement (24a) s'ouvrant vers l'arrière et formé dans une partie supérieure dudit garde-boue arrière (24).
